# EUROPÄISCHE PATENTSCHRIFT

(11) **EP 0 942 218 B1**
(45) Veröffentlichungstag und Bekanntmachung des Hinweises auf die Patenterteilung: **19.10.2005**
(21) Anmeldenummer: 99104694.7
(22) Anmeldetag: 10.03.1999
(51) Int. Cl.: F16L 25/00

(54) **Schraubverbinder für Spiralschläuche**
Screw connector for helically corrugated hoses
Connecteur à vis pour tuyaux ondulés en hélice

(30) Priorität: 13.03.1998 DE 29804558 U
(43) Veröffentlichungstag der Anmeldung: 15.09.1999
(73) Patentinhaber: Messner GmbH & Co.KG, 32689 Kalletal (DE)
(72) Erfinder: Messner, Ernst-Günter, 32699 Extertal (DE)
(74) Vertreter: Strauss, Hans-Jochen

(56) Entgegenhaltungen:
- EP-A- 0 599 602
- FR-A- 2 317 585
- US-A- 3 078 109
- US-A- 4 303 263
- US-A- 4 423 891
- US-A- 5 087 084

## Beschreibung

Die Erfindung betrifft einen Spiralschlauchschraubverbinder mit einem Grundkörper, einer mit einer Schlauchtülle versehenen Schlauchaufnahme und einer auf den Grundkörper aufschraubbaren Überwurf-Schraubkappe, wobei die Schlauchaufnahme als ein hohlzylindrischer Ringspalt ausgebildet ist

Schläuche werden mittels zweiteiligen Kupplungen verbunden. Jede dieser Kupplungsteile weist einen Grundkörper auf, von denen jede so ausgebildet ist, dass sie als Steck- oder als Schraubkupplung aneinanderfügbar ist. Jeder der Grundkörper ist mit einer Schlauchaufnahme versehen, die im Allgemeinen einen hohlzylindrischen Ringspalt bildet, in den der Spiralschlauch eingeschoben werden kann. Mit einer Überwurf-Schraubkappe kann dann das in die Schlauchaufnahme eingeführte Schlauchende festgesetzt werden. Bei diesem Festsetzen durch Anziehen der Überwurf-Schraubkappe wird dann das in der Schlauchaufnahme sitzende Ende des Spiralschlauches gegen eine Dichtfläche der Schlauchaufnahme gepresst, wodurch die Dichtheit erzielt wird. Die Dichtflächen können dabei stirnseitig angeordnet sein; sie können aber auch von der Außenfläche des Innenzylinders der Schlauchaufnahme gebildet sein. Jedes dieser Kupplungsteile kann auch dazu dienen, den Spiralschlauch an ein festes Stutzenende anzuschließen, das dabei entsprechend dem anderen Kupplungsteil ausgebildet ist. Jedes dieser Kupplungsteile bildet dabei einen Schraubverbinder. Derartige Schraubverbinder stellen eine Einengung des Querschnittes dar, insbesondere dann, wenn Spiralschläuche zu verbinden sind.

Aus dem Stand der Technik gemäß der FR-A 2 317 585 ist ein Spiralschlauchschraubverbinder gemäß dem Oberbegriff des Hauptanspruches bekannt. Der Stand der Technik offenbart hier eine Ausführungsform eines Spiralschlauchschraubverbinders mit einem Grundkörper und einer Schlauchtülle, wobei letztere eine Schlauchaufnahme aufweist, die in den Grundkörper einsetzbar ist. Aus dem Stand der Technik ist weiter bekannt, wie die Schlauchtülle mit einem gesetzten Spiralschlauch an dem Grundkörper mittels einer Überwurfschraubkappe verspannt werden kann. Dabei wird das freie Ende des Spiralschlauches in die Schlauchaufnahme der Tülle eingedreht, wobei dann mittels der Überwurfschraubkappe nur die Schlauchtülle in den Grundkörper gedrückt wird. Bei dieser Ausführungsform des Standes der Technik wird es als Nachteilig angesehen, dass insbesondere keine dichtende Presskraft bzw. Andruckkraft auf das freie Ende des Spiralschlauches wirkt, weil der Spiralschlauch mit seinem freien Ende in die an der Schlauchtülle versehene Schlauchaufnahme nur eingedreht ist.

Somit ergibt sich die der Erfindung zugrunde liegende Aufgabenstellung, nach der ein gattungsgemäßer Spiralschlauchschraubverbinder derart weiter zu bilden ist, dass bei einfacher Montage der Spiralschlauch sicher und dicht angeschlossen werden kann, wobei dessen Herstellung wirtschaftlich und die Anwendung einfach und sicher möglich sein soll.

Diese Aufgabenstellung wird durch die im Anspruch 1 enthaltenen Merkmale gelöst; vorteilhafte Weiterbildungen und bevorzugte Ausführungsformen beschreiben die Unteransprüche.

Bei dem erfindungsgemäßen Schraubverbinder ist ein Aufschraubring vorgesehen, der auf das Schlauchende aufgesetzt ist, bevor dieses auf die konische Schlauchtülle aufgesteckt wird. Der bereits vorher auf das Schlauchende aufgesetzte Aufschraubring ist gemeinsam mit dem Spiralschlauch in den hohlzylindrischen Ringspalt der Schlauchaufnahme einführbar. Eingeführt, sind beide mit der Überwurf-Schraubkappe festsetzbar. Durch diese Ausbildung wird das das Abdichten bewirkende Druckelement nach außen verlegt, so dass der Querschnitt des Schraubverbinders hinreichend weit gehalten werden kann und nicht übermäßig eingeengt wird.

Dabei ist bei einer ersten Ausführungsform die Schlauchtülle in den Grundkörper einsetzbar. Hierbei wird vorteilhaft eine Dichtung untergelegt, und die Schlauchtülle mit aufgesetztem Spiralschlauch sowie mit Aufschraubring werden mittels der Überwurf-Schraubkappe festgelegt. Bei einer zweiten Ausführungsform ist die Schlauchtülle einstückiges Bestandteil des Grundkörpers. Hier entfällt das Festlegen der Schlauchtülle mit der Überwurf-Schraubkappe, die hier nur das Schlauchende mit aufgesetztem Aufschraubring festlegt. Beide Ausführungsformen lassen sich vorteilhaft als Kunststoff-Spritzgussteile herstellen.

Erfindungsgemäß weist der Aufschraubring einen Innensteg auf. Dieser ist als mindestens ein Gewindegang ausgebildet. Die Steigung dieses die Innennut bildenden Gewindeganges, die Gangsteigung, entspricht etwa der Gangsteigung eines Spiralschlauches der zugeordneten Schlauchgröße, so dass der Aufschraubring auf den Spiralschlauch aufgeschraubt werden kann. Wesentlich ist, dass dieser Aufschraubring zusammen mit dem zugeordneten Schlauchenden in die hohlzylindrische Schlauchaufnahme eingesetzt und dort mit der Überwurf-Schraubkappe festgesetzt werden kann. Der Querschnitt des Innensteges kann dabei (nahezu) jede Form annehmen; vorteilhaft weist die Innennut einen rechteckigen Querschnitt auf; andere Querschnittformen sind ein etwa dreieckiger oder ein etwa halbrunder Querschnitt.

Bei dem Zusammenfügen wird die Überwurf-Schraubkappe auf das anzuschließende Ende des Spiralschlauches geschoben und dieses Schlauchende in die Schlauchaufnahme eingeführt, wo es von der konischen Schlauchtülle aufgenommen und dort zumindest partiell aufgeweitet wird. Auf den Spiralschlauch ist weiter ein Aufschraubring aufgeschraubt. Gemeinsam mit dem Spiralschlauch wird dieser in den hohlzylindrischen Ringspalt der Schlauchaufnahme eingeführt und dort durch Aufschrauben und Festziehen der Überwurf-Schraubkappe festgelegt.

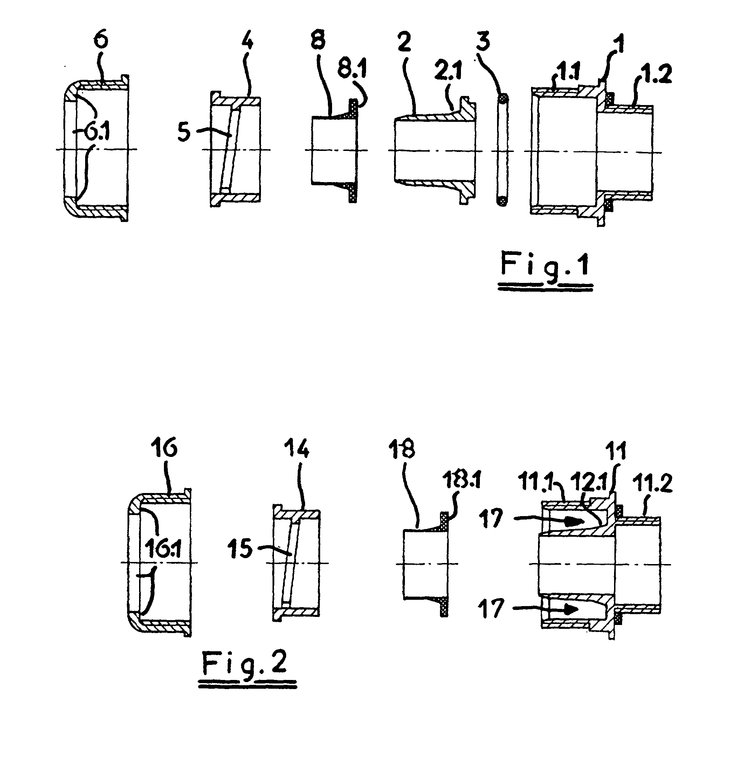

Das Wesen der Erfindung wird an Hand der in Fig. 1 und 2 dargestellten Ausführungsformen beispielhaft näher erläutert; dabei zeigen
- Fig. 1:: Schraubverbinder mit eingesetzter Schlauchtülle (Längs-Schnitt);
- Fig. 2:: Schraubverbinder mit einstückig angeformter Schlauchtülle (Längs-Schnitt).

Der Schraubverbinder besteht aus dem Grundkörper 1 mit einem Doppelnippel 1.1. dessen zweiter Teil 1.2 an einen (nicht dargestellten) Anschluss angeschraubt wird, und in das die das anzusetzende (nicht dargestellte) Ende des Schlauches aufnehmende Schlauchtülle 2 mit Konus 2.1 einsetzbar ist. Eine zwischenfügbare Rundschnurdichtung 3 bewirkt das notwendige Abdichten. Die Innenwandung des Doppelnippels 1.1 und die Aussenwandung der Schlauchtülle 2 bilden dabei einen hohlzylindrischen Ringspalt, der sich wegen des Konus 2.1 zum Grund hin verengt. Der Aufschraubring 4 mit seinem Innensteg 5 ist auf die Außenseite des anzusetzenden Spiralschlauches mit seiner gewindeartig ausgebildeten Außenstruktur aufgeschraubt, wobei dessen Innensteg 5 in den Grund zumindest eines der gewindeartigen Gänge des Spiralschlauches legt und dessen Struktur (im Bereich des Aufschraubringes) zu der eines Voll-Schlauches ergänzt. Die Überwurf-Schraubkappe 6, die nach Aufschrauben mit ihrem Umbug 6.1 den Aufschraubring 4 fasst, presst diesen dann zusammen mit dem Spiralschlauch auf den Konus 2.1 der Schlauchtülle 2 und setzt diesen Spiralschlauch so abgedichtet fest.

Ist die Schlauchtülle nicht gesondert einzusetzen, wird diese einstückig an den Grundkörper angeformt, wie in Figur 2 dargestellt: Hier bilden der Grundkörper 11 und die Schlauchtülle 12 eine Einheit, bei der sich der das Schlauchende aufnehmende hohlzylindrische Ringspalt ebenfalls zwischen dem Doppelnippel 11.1 des Grundkörpers 11 und dem Konus 12.1 der Schlauchtülle 12 befindet. Dieser Ringspalt ist - wegen der einstückigen Ausbildung - von vorn herein dicht und bedarf keiner zusätzlichen Rundschnurdichtung. Das in diesen Ringspalt eingesetzte (nicht näher dargestellte) Ende des Schlauches ist - wie oben beschrieben - mit dem aufgeschraubten Aufschraubring 14 versehen, dessen Innensteg 15 in zumindest einem Gang der gewindeartigen Außenstruktur des Spiralschlauches anliegend, dort die Spiralstruktur des Schlauches zu einer Vollstruktur ergänzt. Dieser Aufschraubring 14 wird von der Überwurf-Schraubkappe 16 mit dem Umbug 16.1 in den sich wegen des Konus 12.1 verengenden Ringspalt 17 gepresst und dort abgedichtet festlegt.

Da bei Spiralschläuchen aufgrund ihrer Struktur nicht von einer glatten Innenwandung auszugehen ist, ist es erfindungsgemäß, wenn sowohl bei einem Grundkörper 1 mit gesondert hergestellter, in diesen einzusetzender Schlauchtülle 2, als auch bei einem Grundkörper 11 mit Schlauchtülle 12, der einstückig hergestellt diese integriert enthält, ein Dichtungseinsatz 8 bzw. 18 mit Bund 8.1 bzw. 18.1 vorgesehen ist. Dieser Dichtungseinsatz 8 bzw. 18 wird in das Innere des (nicht dargestellten) Spiralschlauches eingeführt; sein Bund 8.1 bzw. 18.1 deckt dann die Stirnfläche des Endes des Spiralschlauches ab und legt sich, dieses Ende selbst abdichtend, in den Grund des Ringspaltes 17.

## Patentansprüche

1. Spiralschlauchschraubverbinder mit einem Grundkörper (1, 11), einer mit einer Schlauchtülle (2, 12) versehenen Schlauchaufnahme und einer auf den Grundkörper (1, 11) aufschraubbaren Überwurf-Schraubkappe (6, 16), wobei die Schlauchaufnahme als ein hohlzylindrischer Ringspalt ausgebildet ist, **dadurch gekennzeichnet, dass** der Spiralschlauchschraubverbinder einen auf einen Spiralschlauch aufsetzbaren, gemeinsam mit dem Spiralschlauch in den hohlzylindrischen Ringspalt der Schlauchaufnahme einführbaren, mit der Überwurf-Schraubkappe (6, 16) festsetzbaren Aufschraubring (4, 14) aufweist, wobei der Aufschraubring (4, 14) einen Innensteg (5, 15) aufweist, der als mindestens ein Gewindegang ausgebildet ist, mit einer Gangsteigung, die etwa der Steigung der Gänge der gewindeähnlich ausgebildeten Außenstruktur eines Spiralschlauches der zugeordneten Schlauchgröße entspricht, und dass der Spiralschlauchschraubverbinder einen in das Lumen des Spiralschlauches einsetzbaren, mit einem Bund (8.1, 18.1) versehenen Dichtungseinsatz (8, 18) aufweist, wobei der Bund (8.1, 18.1) die Stirnfläche des Endes des Spiralschlauches abdeckt und in den Grund des hohlzylindrischen Ringspaltes einlegbar ist.

2. Schraubverbinder nach Anspruch 1, **dadurch gekennzeichnet, dass** die Schlauchtülle (2) in den Grundkörper (1) einsetzbar ist.

3. Schraubverbinder nach Anspruch 1, **dadurch gekennzeichnet, dass** die Schlauchtülle (12) einstückiges Bestandteil des Grundkörpers (11) ist.

4. Schraubverbinder nach Anspruch 2 oder 3, **dadurch gekennzeichnet, dass** die Schlauchtülle (2, 12) konisch ausgebildet ist.

5. Schraubverbinder nach einem der Ansprüche 1 bis 4, **dadurch gekennzeichnet, dass** der Querschnitt des Innenstegs (5, 15) etwa rechteckig ist.

6. Schraubverbinder nach einem der Ansprüche 1 bis 4, **dadurch gekennzeichnet, dass** der Querschnitt des Innenstegs (5, 15) etwa dreieckig ist.

7. Schraubverbinder nach einem der Ansprüche 1 bis 4, **dadurch gekennzeichnet, dass** der Querschnitt des Innenstegs (5, 15) etwa halbrund ist.

## Claims

1. A screw connector for a helically corrugated hose, comprising a connector body (1, 11), hose accommodating means incorporating a hose nozzle (2, 12), and a screw-on union screw cap (6, 16) adapted to be screwed onto said connector body (1, 11), said hose accommodating means being in the form of a hollow cylindrical annular gap, **characterized in that** said screw connector comprises a screw-on ring (4, 14) adapted for attachment to a helically corrugated hose and for insertion, together with said helically corrugated hose, into said hollow cylindrical annular gap of said hose accommodating means, in which it can be locked by means of said union screw cap (6, 16), which screw-on ring (4, 14) has an internal fin (5, 15) in the form of at least one male screw thread having a pitch approximately equal to the pitch of the female threads intrinsically formed on the exterior of a helically corrugated hose of corresponding size, and that said screw connector has a sealing insert (8, 18) that is adapted for insertion into the hollow space of said helically corrugated hose and is provided with a collar (8.1, 18.1), which collar (8.1, 18.1) is adapted to cover the end face of said helically corrugated hose and for insertion into the base of said hollow cylindrical annular gap.

2. A screw connector as defined in claim 1. **characterized in that** said hose nozzle (2) is adapted for insertion into said connector body (1).

3. A screw connector as defined in claim 1, **characterized in that** said hose nozzle (12) is integral with said connector body (11).

4. A screw connector as defined in claim 2 or claim 3, **characterized in that** said hose nozzle (2, 12) has a conical shape.

5. A screw connector as defined in any one of claims 1 to 4, **characterized in that** the cross-section of said internal fin (5, 15) is approximately rectangular.

6. A screw connector as defined in any one of claims 1 to 4, **characterized in that** the cross-section of said internal fin (5, 15) is approximately triangular.

7. A screw connector as defined in any one of claims 1 to 4, **characterized in that** the cross-section of said internal fin (5, 15) is approximately half-round.

## Revendications

1. Connecteur à vis pour tuyaux ondulés en hélice, avec un corps de base (1, 11), un logement pour tuyaux muni d'une douille porte-tuyau (2, 12) et un bouchon fileté d'accouplement (6, 16) à visser sur le corps de base (1, 11), le logement pour tuyaux étant conçu comme un passage annulaire en forme de cylindre creux, **caractérisé en ce que** le connecteur à vis pour tuyaux ondulés en hélice comporte une bague à vis (4, 14) à poser sur le tuyau ondulé en hélice, à introduire conjointement avec le tuyau ondulé en hélice dans le passage annulaire, en forme de cylindre creux, du logement pour tuyaux, à fixer avec le bouchon fileté d'accouplement (6, 16), la bague à vis (4, 14) comportant une nervure intérieure (5, 15) qui est conçue sous forme d'au moins une spire avec un pas qui correspond à peu près au pas des spires de la structure extérieure conçue comme un filetage d'un tuyau ondulé en hélice ayant une taille de tuyau correspondante, et **en ce que** le connecteur à vis pour tuyaux ondulés en hélice comporte une garniture d'étanchéité (8, 18) munie d'une collerette (8.1, 18.1), à insérer dans la lumière du tuyau ondulé en hélice, la collerette (8.1, 18.1) recouvrant la face frontale de l'extrémité du tuyau ondulé en hélice et pouvant être logée dans le fond du passage annulaire en forme de cylindre creux.

2. Connecteur à vis selon la revendication 1, **caractérisé en ce que** la douille porte-tuyau (2) peut être insérée dans le corps de base (1).

3. Connecteur à vis selon la revendication 1, **caractérisé en ce que** la douille porte-tuyau (12) est un composant monobloc du corps de base (11).

4. Connecteur à vis selon la revendication 2 ou 3, **caractérisé en ce que** la douille porte-tuyau (2, 12) a une forme conique.

5. Connecteur à vis selon l'une quelconque des revendications 1 à 4, **caractérisé en ce que** la section transversale de la nervure intérieure (5, 15) est à peu près rectangulaire.

6. Connecteur à vis selon l'une quelconque des revendications 1 à 4, **caractérisé en ce que** la section transversale de la nervure intérieure (5, 15) est à peu près triangulaire.

7. Connecteur à vis selon l'une quelconque des revendications 1 à 4, **caractérisé en ce que** la section transversale de la nervure intérieure (5, 15) est à peu près semi-circulaire.
